# EUROPEAN PATENT APPLICATION

(11) **EP 4 412 306 A1**
(43) Date of publication of application: **07.08.2024**
(21) Application number: 21958924.9
(22) Date of filing: 30.09.2021
(51) Int. Cl.: H04W 36/00

(54) **METHOD FOR SENDING HANDOVER ASSISTANCE INFORMATION, HANDOVER METHOD, APPARATUS, AND MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2021/122300
(87) International publication number: WO 2023/050352

(57) **Abstract**

The present application provides a method for sending handover assistance information, a handover method, an apparatus, and a medium, applied to a wireless communication system. The method for sending handover assistance information comprises: a UE used for sidelink communication sends to a base station device a source layer 2 identifier of the UE. The handover method comprises: receiving a source layer 2 identifier sent by a first UE and receiving a handover measurement result sent by a second UE; determining, according to the source layer 2 identifier, that the first UE is a relay UE; sending to the first UE configuration information required for handover; and sending a handover command to the second UE. In the present application, the UE actively reports the source layer 2 identifier to the base station. According to the source layer 2 identifier reported by the first UE, the base station device can identify the first UE corresponding to the identifier; in conjunction with the handover measurement result reported by the second UE, the base station device can determine that the first UE serves as a relay UE. Thus, when the base station device commands the second UE to perform handover, handover to the first UE can be accurately indicated, so that the second UE can be successfully handed over to a relay communication link.

## Description

### TECHNICAL FIELD

The present disclosure relates to the field of wireless communication technologies, and particularly to a method and an apparatus for sending switching-auxiliary information, a method and an apparatus for switching, and a readable storage medium.

### BACKGROUND

In the new radio (NR) system, a communication interface between a user equipment (UE) and a base station is called a Uu interface.

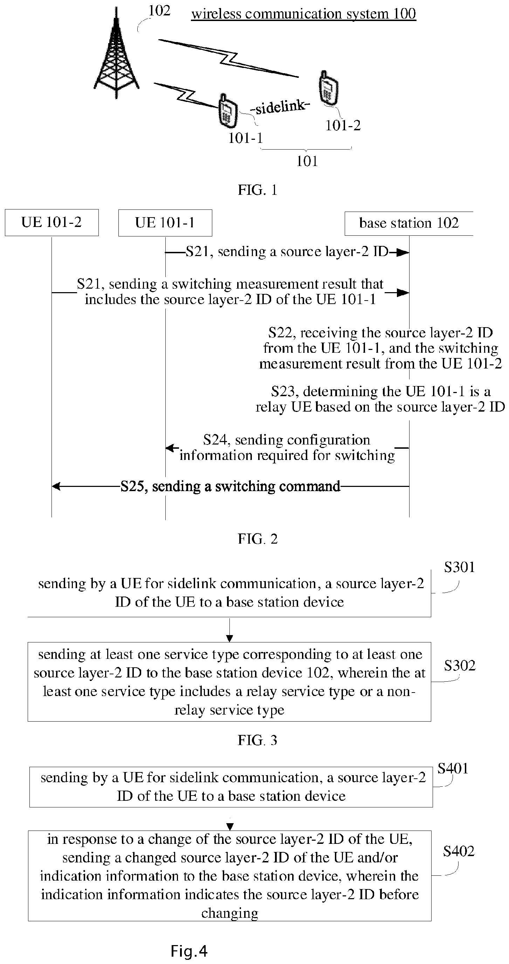

In order to support direct communication between UE and UE, a sidelink communication method is introduced, and an interface between UE and UE is the PCS interface. As shown in FIG. 1, a UE in relay communication that is not directly connected to a base station device 102 is called a remote UE, a UE serving as a relay node is called a relay UE. The communication method between the remote UE and the base station may include: (1) direct communication, where the remote UE is directly connected to the base station and communicates with the base station based on the Uu interface; (2) relay communication, where the remote UE is not directly connected to the base station but another UE serves as a relay node for communication with the base station.

### SUMMARY

In view of the above, a method and an apparatus for sending switching-auxiliary information, a method and an apparatus for switching, and a readable storage medium are provided in the disclosure.

According to a first aspect of embodiments of the disclosure, a method for sending switching-auxiliary information is provided, which is applied to a user equipment (UE). The method includes: sending by the UE for sidelink communication, a source layer-2 ID of the UE to a base station.

Using this method, the UE may actively report the source layer-2 ID to the base station device. Based on the source layer-2 ID reported by the UE, the base station device may identify the UE corresponding to the source layer-2 ID, thus determine the first UE that may serve as a relay node. On this basis, when the base station device indicates the second UE to switch, it may accurately indicate the second UE to switch to the first UE, so that the second UE may successfully switch to a relay communication link.

In a possible implementation, the UE has a relay function.

In a possible implementation, the UE has a relay function, and the UE is in a relay function enabled state.

In a possible implementation, being in the relay function enabled state includes at least one of: sending a relay discovery signal; or receiving a relay discovery signal.

In a possible implementation, the UE has a relay function, and a channel transmission quality with the base station device meets a set transmission quality requirement.

In a possible implementation, the source layer-2 ID of the UE includes at least one source layer-2 ID of the UE.

In a possible implementation, the method further includes: sending by the UE at least one service type corresponding to at least one source layer-2 ID to the base station device, where the at least one service type includes a relay service type or a non-relay service type.

In a possible implementation, the source layer-2 ID of the UE includes at least one source layer-2 ID corresponding to a service type being a relay service type.

In a possible implementation, the method further includes: determining the at least one source layer-2 ID corresponding to the service type being the relay service type.

In a possible implementation, the method further includes: in response to a change of the source layer-2 ID of the UE, sending a changed source layer-2 ID of the UE and/or indication information to the base station device, in which the indication information indicates the source layer-2 ID before changing.

In a possible implementation, the indication information is a sequence number in a source layer-2 ID list containing at least one source layer-2 ID sent to the base station device before the source layer-2 ID is changed.

According to a second aspect of the embodiments of the disclosure, a method for switching is provided, which is applied to a base station device. The method include: receiving a source layer-2 ID from a first UE and receiving a switching measurement result from a second UE, in which the switching measurement result includes the source layer-2 ID of the first UE; determining that the first UE is a relay UE based on the source layer-2 ID; sending configuration information required for switching to the first UE; and sending a switching command to the second UE, in which the switching command indicates switching to the first UE.

Using this method, the base station device may identify based on the source layer-2 ID reported by the first UE, the first UE corresponding to the source layer-2 ID, and may select the first UE as the relay UE based on the switching measurement result reported by the second UE. On this basis, the base station device may accurately indicate switching to the first UE when the base station device instructs the second UE to switch, so that the second UE may successfully switch to the relay communication link.

According to a third aspect of the embodiments of the disclosure, a communication apparatus is provided. The communication apparatus may be used to perform the steps performed by the UE in the above-mentioned first aspect or any possible design of the first aspect. The UE may implement each function in the above method through a hardware structure, a software module, or a hardware structure plus a software module.

When the communication apparatus in the third aspect is implemented through the software module, the communication apparatus may include a transceiver module, in which the transceiver module may be used to support the communication apparatus to communicate.

When performing the steps described in the first aspect, the transceiver module is configured to send the source layer-2 ID of a communication device for sidelink communication to a base station device.

According to a fourth aspect of the embodiments of the disclosure, a communication apparatus is provided. The communication apparatus may be used to implement the steps performed by the base station device in the above-mentioned second aspect or any possible design of the second aspect. The base station device may implement each function in the above method through a hardware structure, a software module, or a hardware structure plus a software module.

When the communication apparatus in the fourth aspect is implemented through the software module, the communication apparatus may include a processing module and a transceiver module coupled to each other. The processing module may be used by the communication apparatus to perform processing operations, such as generating information/messages that need to be sent, or process a received signal to obtain information/messages. The transceiver module may be used to support the communication apparatus to communicate.

When performing the steps described in the second aspect, the transceiver module is configured to receive a source layer-2 ID from a first UE, and receive a switching measurement result from a second UE, in which the switching measurement result includes the source layer-2 ID of the first UE. The processing module is configured to determine that the first UE is a relay UE based on the source layer-2 ID. The transceiver module is further configured to send configuration information required for switching to the first UE; and send a switching command to the second UE, in which the switching command indicates switching to the first UE.

According to a fifth aspect of the embodiments of the disclosure, a communication device is provided, including a processor and a memory storing a computer program. The processor is configured to execute the computer program to implement the first aspect or the any possible design of the first aspect.

According to a sixth aspect of the embodiments of the disclosure, a communication device is provided, including a processor and a memory storing a computer program. The processor is configured to execute the computer program to implement the second aspect or the any possible design of the second aspect.

According to a seventh aspect of the embodiments of the disclosure, a computer-readable storage medium is provided. Instructions (or computer programs, programs) are stored in the computer-readable storage medium. When the instructions are called and executed on a computer, the computer is caused to perform the above first aspect or any possible design of the first aspect.

According to an eighth aspect of the embodiments of the disclosure, a computer-readable storage medium is provided. Instructions (or computer programs, programs) are stored in the computer-readable storage medium. When the instructions are called and executed on a computer, the computer is caused to perform the above second aspect or any possible design of the second aspect.

It should be understood that the foregoing general description and the following detailed description are exemplary and explanatory only, and do not limit the disclosure.

### BRIEF DESCRIPTION OF THE DRAWINGS

The drawings described here are used to provide a further understanding of the embodiments of the disclosure and constitute a part of the disclosure. The schematic embodiments of the disclosure and their descriptions are used to explain the embodiments of the disclosure and do not constitute a limitation to the embodiments of the disclosure.

The accompanying drawings, which are incorporated in and constitute a part of this specification, illustrate the embodiments consistent with the disclosure and together with the description, serve to explain principles of the embodiments of the disclosure.
FIG. 1 is an architecture diagram of a wireless communication system according to an embodiment of the disclosure.
FIG. 2 is a flowchart illustrating information interaction according to an exemplary embodiment.
FIG. 3 is a flowchart illustrating a method for sending switching-auxiliary information according to an exemplary embodiment.
FIG. 4 is a flowchart illustrating another method of sending switching-auxiliary information according to an exemplary embodiment.
FIG. 5 is a structural diagram of an apparatus for sending switching-auxiliary information according to an exemplary embodiment.
FIG. 6 is a structural diagram of another apparatus for sending switching-auxiliary information according to an exemplary embodiment.
FIG. 7 is a structural diagram of a device of a method for switching according to an exemplary embodiment.
FIG. 8 is a structural diagram of a device of another method for switching according to an exemplary embodiment.

### DETAILED DESCRIPTION

The embodiments of the disclosure will now be further described with reference to the accompanying drawings and specific implementations.

Exemplary embodiments may be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of the disclosure. Rather, they are merely examples of apparatus and methods consistent with aspects of the disclosure as detailed in the appended claims.

As shown in FIG. 1, the method for sending switching-auxiliary information and the method for switching according to embodiments of the disclosure may be applied to a wireless communication system 100, which may include a UE 101 and a base station device 102. The UE 101 is configured to support carrier aggregation, and the UE 101 may be connected to a plurality of carrier units of the base station device 102, including a primary carrier unit and one or more secondary carrier units.

It should be understood that the above wireless communication system 100 may be applied to both a low-frequency scenario and a high-frequency scenario. The application scenarios of the wireless communication system 100 include, but are not limited to, a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future fifth-generation (5G) system, a new radio (NR) communication system or a future evolved public land mobile network (PLMN) system, etc.

The above-described UE 101 may be a user equipment, a terminal, an access terminal, a terminal unit, a terminal station, a mobile station (MS), a remote station, a remote terminal, a mobile terminal ( mobile terminal), a wireless communication device, a terminal agent or a user device, etc. The UE 101 may be equipped with a wireless transceiver function, which may communicate (such as wireless communication) with one or more network devices in one or more communication systems, and accept network services provided by the network devices. The network devices here include but are not limited to the shown base station device 102.

The UE 101 may be a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, a vehicle-mounted device, a wearable device, a UE in future 5G networks or a UE in future evolved PLMN networks, etc.

The network device may be an access network device (or an access network site). The access network device refers to a device that provides network access functions, such as a base station in a radio access network (RAN) and the like. The network device may specifically include a base station (BS) device 102, or include a base station device and a wireless resource management device for controlling the base station device, etc. The network device may also include a relay station (relay device), an access point, and a base station in future 5G networks, a base station in future evolved PLMN networks, or a base station in NR networks, etc. The network device may be a wearable device or a vehicle-mounted device. The network device may also be a communication chip with a communication module.

For example, the network device includes but is not limited to: a next-generation node B (gNB) in a 5G system, evolved node B (eNB) in a LTE system, a radio network controller (RNC), a Node B (NB) in a WCDMA system, a wireless controller in a CRAN system, a base station controller (BSC), a base transceiver station (BTS) in a GSM system or CDMA system, a home base station (for example, a home eNB, or a home node B, HNB), a baseband unit (BBU), a transmitting and receiving point (TRP), a transmitting point (TP) or a mobile switching center, etc.

During a communication process between the UE 101 and the base station device 102, as the UE 101 moves, it may move away from a network coverage of the base station device 102. In this scenario, the UE 101 may switch from a communication link with the base station device 102 to a relay link with another UE, and the UE 101 performs relay communication with the base station device 102 via the another UE.

In the relay communication, data and a radio resource control (RRC) signaling may be transmitted via sidelink radio bearer (SLRB) between the remote UE and the relay UE.

During the switching process of the remote UE from the base station to the relay UE, the remote UE needs to report to the base station a switching measurement result that includes the relay UE ID. At this time, the relay UE ID reported by the remote UE is an ID under sidelink communication, while the base station cannot identify the corresponding relay UE through the relay UE ID. Thus, the base station cannot accurately send a configuration for establishing a relay link to the relay UE, which causes the remote UE to fail to switch to the relay UE.

In this disclosure, the UE (such as the relay UE) may actively report the source layer-2 ID of the relay UE based on a direct communication link with the base station. Therefore, after the base station obtains the switching measurement result reported by the remote UE, it may accurately identify the relay UE selected by the remote UE, and then instruct the remote UE to switch to the relay UE.

Embodiments of the disclosure provide a method for sending switching-auxiliary information and a method for switching. Referring to FIG. 2, FIG. 2 is a flowchart illustrating a method for sending switching-auxiliary information and a method for switching according to an exemplary embodiment. As shown in FIG. 2, the method includes the following step S21-S25.

At S21, a first UE 101-1 for sidelink communication sends a source layer-2 ID of the first UE 101-1 to the base station device 102. A second UE 101-2 sends a switching measurement result to the base station device 102. The switching measurement result includes the source layer-2 ID of the first UE 101-1.

At S22, the base station device 102 receives the source layer-2 ID from the first UE 101-1, and the switching measurement result from the second UE 101-2.

At S23, the base station device 102 determines that the first UE 101-1 is a relay UE based on the source layer-2 ID.

At S24, the base station device 102 sends configuration information required for switching to the first UE 101-1.

At S25, the base station device 102 sends a switching command to the second UE 101-2. The switching command indicates switching to the first UE 101-1.

In some possible implementations, at step S22, the first UE 101-1 is a type of device that may serve as a relay UE among the UEs 101, and the second UE 101-2 is a type of device that may serve as a remote UE among the UEs 101. The first UE 101-1 reports its own source layer-2 ID. The second UE 101-2 reports the switching measurement result including the source layer-2 ID of the first UE 101-1.

In some possible implementations, the switching measurement result is obtained by the second UE 101-2 based on a communication measurement with the first UE 101-1. The switching measurement results may include the source layer-2 ID of the first UE 101-1, a serving cell ID of the first UE 101-1, and a sidelink channel quality between the second UE 101-2 and the first UE 101-1.

In the method of the disclosure, the UE may actively report the source layer-2 ID to the base station device. The base station device identifies the first UE corresponding to the source layer-2 ID according to the source layer-2 ID reported by the first UE, so as to accurately determine the first UE that may serve as a relay node. On this basis, when the base station device indicates the second UE to switch, it may accurately indicate the second UE to switch to the first UE, so that the second UE may successfully switch to the relay communication link.

Embodiments of the disclosure provide a method for sending switching-auxiliary information. The method is executed by the UE 101. The method includes the following S1-1.

At S1-1, the UE 101 for sidelink communication sends a source layer-2 ID of the UE 101 to the base station device 102.

In some possible implementations, during sidelink communication between the UEs 101, when the UE101 sends sidelink data, addressing needs to be performed according to a destination address and a source address. An application layer of the UE 101 sends to its access layer a source layer-2 address and a destination layer-2 address, both of which are 24 bits in length. The lower 8 bits of the source layer-2 address are carried in a serial communication interface (SCI), which become a source layer-1 address, and the remaining 16 bits of the source layer-2 address are carried in a sub-header of a media access control (MAC) layer. The lower 16 bits of the destination layer-2 address are carried in the SCI, which become a destination layer-1 address, and the remaining 8 bits of the destination layer-2 address are carried in the MAC sub-header. The source layer-2 ID corresponds to the source layer-2 address.

In some possible implementations, the UEs 101 include a first UE 101-1 and a second UE 101-2. The first UE 101-1 is a type of UE 101 serving as a relay UE among the UEs 101, and the second UE 101-2 is a type of UE 101 serving as a remote UE among the UEs 101. Both the first UE 101-1 and the second UE 101-2 may support sidelink communication.

In the method of the disclosure, the source layer-2 ID reported by the first UE may be identified by the base station device 102, so that the base station device 102 may accurately identify the relay UE, and the remote UE may successfully switch to the relay UE.

Embodiments of the disclosure provide a method for sending switching-auxiliary information. This method is executed by the UE 101. The method includes the above S1-1. In the method, the UE 101 has a relay function.

In some possible implementations, the UE 101 with the relay function may serve as a relay node that causes another UE to communicate with the base station device 102.

In an example, the first UE 101-1 has a relay function and may report its own source layer-2 ID to the base station device 102. When the communication quality between the second UE 101-2 and the base station device 102 decreases, the second UE 101-2 may communicate with the base station through the first UE 101-1.

Embodiments of the disclosure provide a method for sending switching-auxiliary information. This method is executed by the UE 101. The method includes the above S1-1. In the method, the UE 101 has a relay function and the UE 101 is in a relay function enabled state.

In some possible implementations, the UE 101 may enable the relay function, or a discovery process. After the relay function is enabled, the first UE 101-1 as a relay UE and the second UE 101-1 as a remote UE may discover each other.

In some possible implementations, the relay function enabled state includes at least one of: sending a relay discovery signal; or receiving a relay discovery signal.

In some possible implementations, both the first UE 101-1 and the second UE 101-2 are in the relay function enabled state, and the second UE 101-2 may send a relay discovery signal to the first UE 101-1, or receive a relay discovery signal from the first UE 101-1. Alternatively, the first UE 101-1 sends a relay discovery signal to the second UE 101-2, or receives a relay discovery signal from the second UE 101-2.

In some possible implementations, information such as an ID of a sending UE, and a serving cell ID are carried in the relay discovery signal.

Embodiments of the disclosure provide a method for sending switching-auxiliary information. This method is executed by the UE 101. The method includes the above S1-1. In the method, the UE has a relay function, and a channel transmission quality with the base station device 102 meets a set transmission quality requirement.

In some possible implementations, the set transmission quality requirement includes that the channel transmission quality between the first UE 101-1 and the base station device 102 is higher than a first set threshold. After meeting the set transmission quality requirement, the first UE 101 may enable the relay function.

In some possible implementations, the set transmission quality requirement includes that the channel transmission quality between the first UE 101-1 and the base station device 102 is lower than a second set threshold. After meeting the set transmission quality requirement, the first UE 101-1 may enable the relay function.

In some possible implementations, the set transmission quality requirement includes that the channel transmission quality between the first UE 101-1 and the base station device 102 is higher than the first set threshold and lower than the second set threshold. The second set threshold is greater than the first set threshold. After meeting the set transmission quality requirement, the first UE 101-1 may enable the relay function.

In an example, the first set threshold is a, the second set threshold is b, and the channel transmission quality between the first UE 101-1 and the base station device 102 is within (a, b). At this time, the first UE 101-1 may enable the relay function.

Embodiments of the disclosure provide a method for sending switching-auxiliary information. The method is executed by the UE 101. The method includes the above S1-1. In the method, the source layer-2 ID of the UE 101 includes at least one source layer-2 ID of the UE 101.

In some possible implementations, the UE 101 may include a plurality of source layer-2 IDs according to different service types. For example, service types of the UE 101 include a relay service type and a non-relay service type. At least one source layer-2 ID corresponding to the relay service type may be set, and at least one source layer-2 ID corresponding to the non-relay service type may be set.

In an example, the first UE 101-1 may only report the source layer-2 ID corresponding to the relay service type, and a number of source layer-2 IDs corresponding to the relay service type may be one or more.

Embodiments of the disclosure provide a method for sending switching-auxiliary information. The method is executed by the UE 101. Referring to FIG. 3, FIG. 3 is a flowchart illustrating a method for sending switching-auxiliary information according to an exemplary embodiment. The method includes the following steps 301-302.

At S301, a UE for sidelink communication sends a source layer-2 ID of the UE to the base station device.

At S302, the UE 101 sends at least one service type corresponding to at least one source layer-2 ID to the base station device 102. The at least one service type includes a relay service type or a non-relay service type.

In an example, during the process of reporting the source layer-2 ID, the first UE 101-1 may synchronously report that a service type corresponding to each source layer-2 ID is a relay service type or a non-relay service type.

Embodiments of the disclosure provide a method for sending switching-auxiliary information. The method is executed by the UE 101. The method includes the above S1-1. In the method, the source layer-2 ID of the UE 101 includes at least one source layer-2 ID corresponding to a service type being a relay service type.

In some possible implementations, there may be a plurality of source layer-2 IDs reported by the first UE 101-1, and the source layer-2 ID corresponding to the relay service type may be at least one of the source layer-2 IDs.

Embodiments of the disclosure provide a method for sending switching-auxiliary information. The method is executed by the UE 101. The method includes the above S1-1. The method also includes: determining the at least one source layer-2 ID corresponding to the service type being the relay service type.

In some possible implementations, when the UE 101 reports the plurality of source layer-2 IDs, the UE 101 needs to determine a source layer-2 ID in which the service type is a relay service type.

Embodiments of the disclosure provide a method for sending switching-auxiliary information. This method is executed by the UE 101. Referring to FIG. 4, FIG. 4 is a flowchart illustrating a method for sending switching-auxiliary information according to an exemplary embodiment. The method includes the following steps S401-S402.

At S401, a UE for sidelink communication sends a source layer-2 ID of the UE to the base station device.

At S402, in response to a change of the source layer-2 ID of the UE 101, a changed source layer-2 ID of the UE 101 and/or indication information are sent to the base station device. The indication information indicates the source layer-2 ID before changing.

In some possible implementations, after the source layer-2 ID of the UE 101 is changed, it needs to be reported in time to the base station device 102, so that the base station device 102 may re-determine the relay UE based on the changed information.

In an example, after the source layer-2 ID of the UE 101 is changed, the changed source layer-2 ID and the source layer-2 ID before changing may be reported.

In an example, after the source layer-2 ID of the UE 101 is changed, the changed source layer-2 ID and indication information may be reported, and the indication information may indicate the address of the source layer-2 ID before changing.

In some possible implementations, the indication information is a sequence number in a source layer-2 ID list containing at least one source layer-2 ID sent to the base station device before the source layer-2 ID is changed.

In an example, a transmission after the source layer-2 ID is changed is a N^{h} transmission, and the latest transmission may be a (N-1)^{th} transmission. The indication information may be a sequence number in the source layer-2 ID list reported during the (N-1)^{th} transmission.

An embodiment of the disclosure provides a method for switching. The method is performed by the base station device 102. The method includes the following S2-1 to S2-4.

At S2-1, a base station device 102 receives a source layer-2 ID from a first UE 101-1, and receives a switching measurement result from a second UE 101-2. The switching measurement result includes the source layer-2 ID of the first UE.

At S2-2, the base station device 102 determines that the first UE 101-1 is a relay UE based on the source layer-2 ID.

At S2-3, the base station device 102 sends to the first UE 101-1, configuration information required for switching.

At S2-4, the base station device 102 sends a switching command to the second UE 101-2. The switching command indicates switching to the first UE.

In some possible implementations, the base station device 102 may determine a relay UE corresponding to the source layer-2 ID based on information reported by the first UE 101-1 and the second UE 101-2. The base station device 102 sends to the relay UE, the configuration information required for switching, so as to establish a link with the second UE 101-2.

In some possible implementations, the switching measurement result includes source layer-2 IDs of a plurality of first UEs 101-1, and a sidelink channel quality between the second UE 101-2 and each of the first UEs 101-1. The base station device 102 may select a target first UE as a relay UE according to the switching measurement result.

In some possible implementations, relevant information of the selected relay UE may be carried in the switching command, such as the source layer-2 ID and related configuration. After receiving the switching command, the second UE 101-2 may connect to the base station device 102 through the relay UE selected by the base station device 102.

Using the method, the base station device may identify the first UE corresponding to the source layer-2 ID based on the source layer-2 ID reported by the first UE, and may select the first UE as the relay UE based on the switching measurement result reported by the second UE. On this basis, the base station device may accurately indicate switching to the first UE when the base station device instructs the second UE to switch, so that the second UE may successfully switch to the relay communication link.

In some possible implementations, the first UE 101-1 has a relay function.

In some possible implementations, the first UE 101-1 has a relay function, and is in a relay function enabled state.

In some possible implementations, being in the relay function enabled state includes at least one of: sending a relay discovery signal; or receiving a relay discovery signal.

In some possible implementations, the first UE 101-1 has a relay function, and a channel transmission quality with the base station device meets a set transmission quality requirement.

In some possible implementations, the source layer-2 ID of the first UE 101-1 includes at least one source layer-2 ID of the UE.

In some possible implementations, the method further includes: sending by the first UE 101-1 at least one service type corresponding to at least one source layer-2 ID to the base station device, where the at least one service type includes a relay service type or a non-relay service type.

In some possible implementations, the source layer-2 ID of the first UE 101-1 includes at least one source layer-2 ID corresponding to a service type being a relay service type.

In some possible implementations, the method further includes: determining the at least one source layer-2 ID corresponding to the service type being the relay service type.

In some possible implementations, the method further includes: in response to a change of the source layer-2 ID of the UE, sending a changed source layer-2 ID of the UE and/or indication information to the base station device, in which the indication information indicates the source layer-2 ID before changing.

In some possible implementations, the indication information is a sequence number in a source layer-2 ID list containing at least one source layer-2 ID sent to the base station device before the source layer-2 ID is changed.

Based on the same concept as the above method embodiments, embodiments of the disclosure also provide a communication apparatus, which may have the functions of the UE 101 in the above method embodiments, and is used to implement the functions performed by the UE 101 in the above embodiments. The functions may be implemented in hardware, or in software, or in hardware executing corresponding software. The hardware or software includes one or more modules corresponding to the above functions.

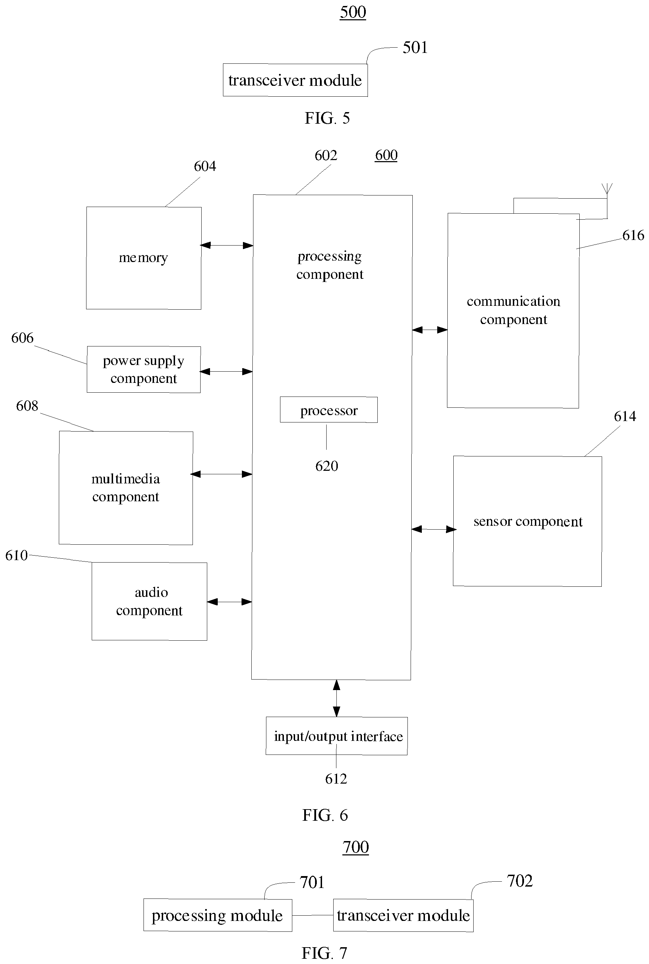

In a possible implementation, the communication apparatus 500 shown in FIG. 5 may serve as the UE 101 involved in the above method embodiments, and implement the steps performed by the UE 101 in the above method embodiments. As shown in FIG. 5, the communication apparatus 500 may include a transceiver module 501 . The transceiver module 501 may be used to support the communication apparatus 500 to communicate, and the transceiver module 502 may have a wireless communication function, for example, may perform wireless communication with other communication apparatus through a radio interface.

When the steps performed by the UE 101 are implemented, the transceiver module 501 is configured to send a source layer-2 ID of the communication apparatus to a base station device, in which the communication apparatus is a UE that supports sidelink communication.

When the communication apparatus is the UE 101, its structure may also be as shown in FIG. 6. The device 600 may be a mobile phone, a computer, a digital broadcast terminal, a messaging device, a game console, a tablet device, a medical device, a fitness device, a personal digital assistant, or the like.

Referring to FIG. 6, the device 600 may include one or more of: a processing component 602, a memory 604, a power supply component 606, a multimedia component 608, an audio component 610, an input/output (I/O) interface 612, a sensor component 614, and a communication component 616.

The processing component 602 generally controls the overall operations of the device 600, such as operations associated with display, phone calls, data communications, camera operations, and recording operations. The processing component 602 may include one or more processors 620 to execute instructions to complete all or part of the steps of the above methods. Additionally, the processing component 602 may include one or more modules that facilitate interactions between the processing component 602 and other components. For example, the processing component 602 may include a multimedia module to facilitate interactions between the multimedia component 608 and the processing component 602.

The memory 604 is configured to store various types of data to support operations at the device 600. Examples of such data include instructions for any application program or method operating on the device 600, contact data, phonebook data, messages, pictures, videos, etc. The memory 604 may be implemented by any type of volatile or non-volatile storage device, or their combination, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power supply component 606 provides power to the various components of the device 600. The power supply components 606 may include a power management system, one or more power supplies, and other components associated with generating, managing, and distributing power to the device 600.

The multimedia component 608 includes a screen that provides an output interface between the device 600 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense a boundary of a touch or slide action, but also detect a duration and a pressure associated with the touch or slide action. In some embodiments, the multimedia component 608 includes a front-facing camera and/or a rear-facing camera. When the device 600 is in an operating mode, such as a shooting mode or a video mode, the front-facing camera and/or the rear-facing camera may receive external multimedia data. Each of the front-facing camera and the rear-facing camera may be a fixed optical lens system, or have a focal length and optical zoom capabilities.

The audio component 610 is configured to output and/or input audio signals. For example, the audio component 610 includes a microphone (MIC) configured to receive external audio signals when the device 600 is in operating modes, such as a call mode, a recording mode, and a speech recognition mode. The received audio signals may be further stored in the memory 604 or sent via the communication component 616. In some embodiments, the audio component 610 also includes a speaker for outputting audio signals.

The I/O interface 612 provides an interface between the processing component 602 and a peripheral interface module, which may be a keyboard, a click wheel, a button, etc. These buttons may include, but are not limited to: a home button, volume buttons, a start button, and a lock button.

The sensor component 614 includes one or more sensors for providing various aspects of status assessment for the device 600. For example, the sensor component 614 may detect an open/closed state of the device 600, a relative positioning of components, such as the display and keypad of the device 600. The sensor component 614 may also detect a change in position of the device 600 or a component of the device 600, a presence or absence of a user contact with the device 600, an orientation or an acceleration/deceleration of the device 600, and a temperature change of the device 600. The sensor component 614 may include a proximity sensor configured to detect a presence of nearby objects without any physical contact. The sensor component 614 may also include a light sensor, such as a CMOS or CCD image sensor, for use in imaging applications. In some embodiments, the sensor component 614 may also include an acceleration sensor, a gyroscope sensor, a magnetic sensor, a pressure sensor, or a temperature sensor.

The communication component 616 is configured to facilitate wired or wireless communication between the device 600 and other devices. The device 600 may access a wireless network based on a communication standard, such as WiFi, 4G or 5G, or their combination. In an exemplary embodiment, the communication component 616 receives broadcast signals or broadcast related information from an external broadcast management system via a broadcast channel. In an exemplary embodiment, the communication component 616 also includes a near field communications (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the device 600 may be implemented by one or more application specific integrated circuits (ASICs), digital signal processors (DSPs), digital signal processing devices (DSPDs), programmable logic devices (PLDs), a field programmable Gate array (FPGA), controllers, microcontrollers, microprocessors or other electronic components, for executing the above methods.

In an exemplary embodiment, a non-transitory computer-readable storage medium including instructions is also provided, such as the memory 604 including instructions, which are executable by the processor 620 of the device 600 to complete the above method. For example, the non-transitory computer-readable storage medium may be a ROM, a random access memory (RAM), a CD-ROM, a magnetic tape, a floppy disk, an optical data storage device, etc.

Based on the same concept as the above method embodiments, embodiments of the disclosure also provide a communication apparatus, which may have the functions of the base station device 102 in the above method embodiments, and may be used to implement the steps performed by the base station device 102 in the above method embodiments. The functions may be implemented in hardware, or in software, or in hardware executing corresponding software. The hardware or software includes one or more modules corresponding to the above functions.

In a possible implementation, the communication apparatus 700 shown in FIG. 7 may serve as the base station device 102 involved in the above method embodiments, and implement the steps performed by the base station device 102 in the above method embodiments. As shown in FIG. 7, the communication apparatus 700 may include a processing module 701 and a transceiver module 702 coupled to each other. The processing module 701 may be used by the communication device to perform processing operations, such as generating information/messages that need to be sent, or processing received signals to obtain information/messages. The transceiver module 702 may be used to support the communication apparatus 700 to communicate. The transceiver module 702 may have a wireless communication function, for example, may perform wireless communication with other communication device through a radio interface.

When the steps performed by the base station device are implemented, the transceiver module 702 is used to receive a source layer-2 ID sent by a first UE, and receive a switching measurement result sent by a second UE, in which the switching measurement result includes the source layer-2 ID of the first UE. The processing module 701 is configured to determine that the first UE is a relay UE according to the source layer-2 ID. The transceiver module 702 is further configured to send to the first UE configuration information required for switching; and send a switching command to the second UE, in which the switching command indicates switching to the first UE.

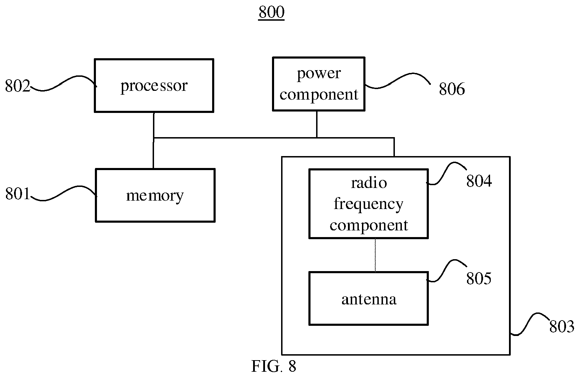

When the communication device is a network device, its structure may also be as shown in FIG. 8. Taking the base station device 102 as an example, the structure of the communication device will be described. As shown in FIG. 8, the device 800 includes a memory 801, a processor 802, a transceiver component 803, and a power supply component 806. The memory 801 is coupled to the processor 802 and may be used to save programs and data necessary for the communication device 800 to implement various functions. The processor 802 is configured to support the communication device 800 to perform corresponding functions in the above methods, and the functions may be implemented by calling a program stored in the memory 801. The transceiver component 803 may be a wireless transceiver, which may be used to support the communication device 800 to receive signaling and/or data and to send signaling and/or data through a radio interface. The transceiver component 803 may also be called a transceiver unit or a communication unit. The transceiver component 803 may include a radio frequency component 804 and one or more antennas 805. The radio frequency component 804 may be a remote radio unit (RRU). Specifically, the RRU may be used for a transmission of radio frequency signals and a conversion between radio frequency signals and baseband signals. The one or more antennas 805 may be specifically used for radiating and receiving radio frequency signals.

When the communication device 800 needs to send data, the processor 802 may perform baseband processing on data to be sent, and then output a baseband signal to the radio frequency unit. The radio frequency unit performs radio frequency processing on the baseband signal and then sends a radio frequency signal in the form of electromagnetic waves through the antenna. When data is sent to the communication device 800, the radio frequency unit receives a radio frequency signal through the antenna, converts the radio frequency signal into a baseband signal, and outputs the baseband signal to the processor 802. The processor 802 converts the baseband signal into data and processes the data.

Other implementations of the embodiments disclosed herein may be readily apparent to those skilled in the art, upon consideration of the specification and practice of the invention disclosed herein. The disclosure is intended to cover any variations, uses, or adaptations of the embodiments of the disclosure that follow the general principles of the embodiments of the disclosure and include common knowledge or conventional technical means in the technical field that is not disclosed in the disclosure. It is intended that the specification and examples be considered as exemplary only, with a true scope and spirit of the disclosed embodiments being indicated by the following claims.

It is to be understood that the embodiments disclosed herein are not limited to the precise structures described above and illustrated in the accompanying drawings, and various modifications and changes may be made without departing from the scope of the disclosure. The scope of the embodiments disclosed herein is limited only by the appended claims.

### Industrial applicability

The UE for sidelink communication actively reports its own source layer-2 ID to the base station. Based on the source layer-2 ID reported by the first UE, the base station device may identify the first UE corresponding to the source layer-2 ID. Combining with the switching measurement results reported by the second UE, the base station device may determine that the first UE is a relay UE. Therefore, when the base station device instructs the second UE to perform switching, it may accurately indicate switching to the first UE, so that the second UE may successfully switch to the relay UE communication link.

## Claims

1. A method for sending switching-auxiliary information, applied to a user equipment (UE), comprising:
sending by the UE for sidelink communication, a source layer-2 ID of the UE to a base station device.

2. The method according to claim 1, wherein the UE has a relay function.

3. The method according to claim 1, wherein the UE has a relay function, and the UE is in a relay function enabled state.

4. The method according to claim 3, wherein being in the relay function enabled state comprises at least one of:
sending a relay discovery signal; or
receiving a relay discovery signal.

5. The method according to claim 1, wherein the UE has a relay function, and a channel transmission quality with the base station device meets a set transmission quality requirement.

6. The method according to claim 1, wherein the source layer-2 ID of the UE comprises: at least one source layer-2 ID of the UE.

7. The method according to claim 6, further comprising:
sending by the UE, at least one service type corresponding to the at least one source layer-2 ID to the base station device, wherein the at least one service type comprises a relay service type or a non-relay service type.

8. The method according to claim 1, wherein the source layer-2 ID of the UE comprises at least one source layer-2 ID corresponding to a service type being a relay service type.

9. The method according to claim 8, further comprising:
determining the at least one source layer-2 ID corresponding to the service type being the relay service type.

10. The method according to claim 1, further comprising: in response to a change of the source layer-2 ID of the UE, sending a changed source layer-2 ID of the UE and/or indication information to the base station device, wherein the indication information indicates the source layer-2 ID before changing.

11. The method according to claim 10, wherein the indication information is a sequence number in a source layer-2 ID list containing at least one source layer-2 ID sent to the base station device before the source layer-2 ID is changed.

12. A method for switching, applied to a base station device, comprising:
receiving a source layer-2 ID from a first user equipment (UE), and receiving a switching measurement result from a second UE, wherein the switching measurement result comprises the source layer-2 ID of the first UE;
determining that the first UE is a relay UE based on the source layer-2 ID;
sending configuration information required for switching to the first UE; and
sending a switching command to the second UE, wherein the switching command indicates switching to the first UE.

13. A communication apparatus, comprising:
a transceiver module, configured to send a source layer-2 ID of a communication device for sidelink communication to a base station device.

14. A communication apparatus, comprising:
a transceiver module, configured to receive a source layer-2 ID from a first user equipment (UE), and receive a switching measurement result from a second UE, wherein the switching measurement result comprises the source layer-2 ID of the first UE; and
a processing module, configured to determine that the first UE is a relay UE based on the source layer-2 ID;
wherein the transceiver module is further configured to send configuration information required for switching to the first UE; and send a switching command to the second UE, wherein the switching command indicates switching to the first UE.

15. A communication device, comprising a processor and a memory storing a computer program, wherein the processor is configured to execute the computer program to implement the method according to any one of claims 1 to 11.

16. A communication device, comprising a processor and a memory storing a computer program, wherein the processor is configured to execute the computer program to implement the method according to claim 12.

17. A computer-readable storage medium storing instructions, wherein when the instructions are called and executed on a computer, the computer is caused to perform the method according to any one of claims 1 to 11.

18. A computer-readable storage medium storing instructions, wherein when the instructions are called and executed on a computer, the computer is caused to perform the method according to claim 12.
